# EUROPEAN PATENT APPLICATION

(11) **EP 1 712 879 A1**
(43) Date of publication of application: **18.10.2006**
(21) Application number: 05252248.9
(22) Date of filing: 11.04.2005
(51) Int. Cl.: G01C 21/00, G06K 17/00, G06T 1/00, H04N 1/21

(54) **Methods and apparatus for determining location, providing location information, and providing location specific information**

(71) Applicant: Last Mile Communications/Tivis Limited, Teignmouth, Devon TQ14 5TS (GB)
(72) Inventor: The designation of the inventor has not yet been filed
(74) Representative: Ribeiro, James Michael

(57) **Abstract**

A method of determining geographical location, the method comprising taking a picture of a sign; and analysing the picture data to extract a location code which is indicative of a geographical location. Alternatively the location code may be input via a user input device such as a keypad. A plurality of signs are distributed in the environment, each sign including a visual representation of a location code which is indicative of the geographical location of the respective sign. The signs are distributed by receiving a sign request from a client; and transmitting location code information to the client in response to the sign request to enable the client to print a sign using the location code information. The location code may be encoded as a Gray Code.

## Description

The present invention relates to a method, and associated apparatus, for determining geographical location, providing location specific information, and providing distributed location information in the environment.

Various applications need to be able to locate a person so that they can either report an incident or emergency, or orientate themselves, or receive information specific to that location.

GPS is getting ever cheaper, but it will never work better inside buildings or high rise streets, and it is not certain that GPS receivers will ever be universally integrated within mobile phones.

The invention provides various methods to enable a person to locate themselves without requiring GPS.

A first aspect of the invention provides a method (and associated apparatus) for determining geographical location, the method comprising taking a picture of a sign to generate picture data; and analysing the picture data to extract a location code which is indicative of a geographical location.

A second aspect of the invention provides a method (and associated apparatus) for determining geographical location, the method comprising reading a location code which is indicative of a geographical location, and inputting the location code into a user input device.

The user input device may be any device for receiving input from a human user, such as a keypad (either real, or virtual via a touch-screen), or a microphone coupled with voice recognition software.

A third aspect of the invention provides a method (and associated apparatus) for providing location specific information, the method comprising receiving a location code which has been determined by a method according to either of the preceding methods; and transmitting location specific information to a user in accordance with the location code.

A fourth aspect of the invention provides a method (and associated apparatus) for providing location information, the method comprising distributing a plurality of signs in the environment, each sign including a visual representation of a location code which is indicative of the geographical location of the respective sign.

The location code may be represented on the sign in a human-readable form (such as with numeric and/or alphanumeric characters) and/or in a machine readable form (such as a chequerboard pattern).

A fifth aspect of the invention provides a method (and associated apparatus) for providing location information, the method comprising receiving a sign request from a client; and transmitting location code information to the client in response to the sign request to enable the client to print a sign using the location code information, the sign including a visual representation of a location code which is indicative of the geographical location of the respective sign.

A minute of arc is a nautical mile of latitude, and of longitude at the equator. A nautical mile is approximately 2000 metres.

Thus navigational information in the form ddd° mmmm', ie degrees and ten-thousandths of a minute, is precise to 20 centimetres at the equator, and gives increasing precision in longitude towards the pole.

Whilst this precision is certainly sufficient for some needs, removal of the last decimal place of minutes of arc reduces the precision to 2 metres, something that would not be sufficient for some applications, such as data-mining in retail outlets.

Conventionally Longitude is given as 0-180 degrees East or West, and Latitude as 0-90 degrees North or South. These add two more characters to a string, so the minimum number of characters to show this explicitly is 15, of which two are Alpha (without commas or degree or minute symbols).

The WGS-84 (World Geodetic System 84) standard is commonly used. There appears to be no easy answer to giving a single simple format for manual data entry of data in the WGS-84 standard format. However, someone with only a cell phone key pad wanting to report an emergency, or do something location specific like book a taxi could reduce the numbers to the format below:
dmmdmm

Only the last digit of degrees is needed, because the cell phone node 'knows' where the person is calling from to about 10 km. Only leaving two significant figures of minutes reduces accuracy to about 20 metres: the question is whether this is sufficient accuracy for all such phone call out needs. It also relies on the network operator to supply the cell information, and this has cost and other commercial implications.

People are used to entering bigger numbers than this, viz
Ddmmmddmmm
would position them to within 2 metres so long as the user knew in which of the eight segments of the earth he was on. However London and Paris are on the meridian, and so the E and W bits become important, and there are many places of habitation which straddle the equator.

Arbitrarily altering the number format, for instance adding 180 degrees to Longitude, gets over the EW problem, but leaves the cross-over on the Meridian. Whilst it is common human failing to remember to do something when there are only a few possibilities, or the system in use makes a bit of sense, it is actually a lot easier to be accurate if there are no easy presuppositions as to what has to be done, or in this case entered. So there is actually virtue in having something that appears always discontinuous to the user and requires care under all circumstances.

'Gray Codes' are known in electronics, particularly for encoder wheels, which measure rotation. These are binary codes, but rearranged so that only bit changes at a time. They take care of the problem inherent in the Lat Long measurement of the world in respect of remembering E/W or N/S.

The circumference of the earth is just over 40 million metres, or 4 billion centimetres. It would therefore be possible to construct a 32 bit gray code which gave 1 centimetre resolution at the equator. Gray codes however cannot be simply truncated to reduce precision, but have to be converted. A shorter 25 bit code could be used to give one metre approximate resolution.

A Gray code in latitude would not work well because travel over the North or South poles would result in adding 180 to longitude. However fortunately very few people travel in the polar regions, so having a singly defined Gray code, running from the North to South pole will work for the vast majority of users. Clearly 24 bits are needed for meter precision, 49 bits in all to encode with Longitude in the form above. In Hexadecimal this is more than 6 bytes, represented by 13 hexadecimal characters. Encoded into the smallest decimal notation this could be done in 15 characters.

However if the aim is for the user to be able to enter this on a cell phone to position himself this is reasonable in an emergency: phone users are well used now to generating small text messages.

As a more concise alternative to hexadecimal, it is possible to construct a 32 element character set using the ten single numeric characters 0-9, and the alphabet less a few characters removed to make the set easier to enter without confusion. Normally I, O, Q and one other are removed, giving a character set of 32. Thus 49 bits need to be encoded, which at 5 bits per character yields only a ten character value. Using this alphanumeric set can specify the position of a person or thing to an accuracy of one metre on the surface of the earth. These numbers will appear to the user to be totally random, and at a length of 10 characters should be relatively simple to enter into a cell phone without error.

Since hexadecimal is a format that is unfamiliar to most people and does not give the shortest code, it is probable that offering both the decimal numeric 15 character representation that can be entered on a simple numeric keypad such as on a phone, and the shorter 10 character alphanumeric code which can be entered via alphanumeric keys where that is convenient will, suit most user needs.

However this invention primarily meets the needs of those with standard mobile phones, and latterly a high proportion of new phones have been fitted with digital cameras that can send images attached to messages. A more convenient and certain method of obtaining position information, particularly in an emergency situation is to employ such a camera to read the code in a machine readable form. Familiar bar codes are one such form of machine readable code, but since they are in a long thin strip they do not well suit the characteristics of a simple digital camera.

However a pattern such as that familiar in a cross word puzzle, in which, to a fixed pattern such as a chequer board of 8X8 squares, wherein each square which could be either black or white, is a machine readable alternative well suited to digital camera characteristics. Each 8X8 square pattern can encode 64 bits. If a solid black line is drawn all the way around the outside then this allows a relatively simple graphical algorithm to scale the picture. Since only 49 bits are needed, some of the squares could be reserved to filled in black and some reserved in white and never filled to form an asymmetric reference pattern which would enable an algorithm to determine the orientation of the pattern, and which side it was being viewed from.

A provider could host a map on each of its national servers, and allow any interested party to find their own position by zooming right down to the metre level and marking a point. The server can then send back this alphanumeric position ID in a form that it can be printed on common printers (perhaps in MS Word or .RTF, or as a PDF). Such a print-out could include a logo and banner, together with the numeric, alphanumeric, and chequer board machine readable form of the code for that location. The aim would be that those considering using the system would stick it up in their shops and offices. There would be some genuine utility if for instance courier firms started to use it instead of an address.

An embodiment of the invention will now be described with reference to the accompanying drawing, in which:
Figure 1 is a schematic system diagram;
Figure 2 shows a sign;
Figure 3 shows a camera phone;
Figure 4 shows a machine readable chequerboard pattern.

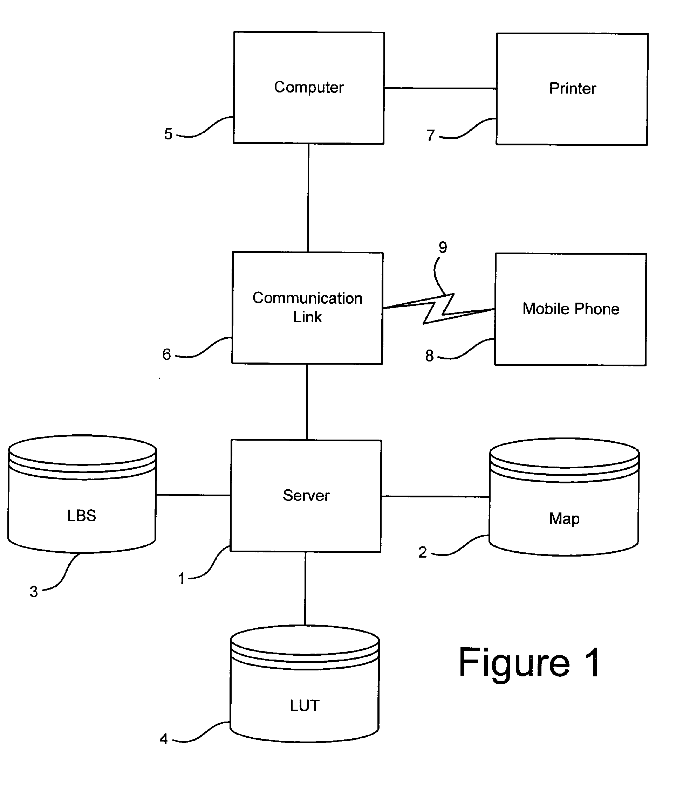

A system according to an embodiment of the invention is shown in Figure 1. A server 1 hosts a map database 2, a location-based-service (LBS) database 3 and a code look-up-table database 4.

A client computer 5 is connected to the server via a communication link 6 (such as the internet). A user (such as the owner of a retail establishment) finds their position by downloading map data from the map database to the client computer 5 and zooming down to the metre level and marking a point on the map. The identity of this point is then transmitted to the server 1, which retrieves the WGS-84 data (or any other data defining the geographical location of that point) from the map database 2. The WGS-84 data is then input into look-up-table database 4 which returns a binary Gray Code, an alphanumeric code and/or a numeric code associated by this invention with the WGS-84 data. The server 1 then compiles an image file and transmits the image file to the client computer 5 which prints the image file on a printer 7.

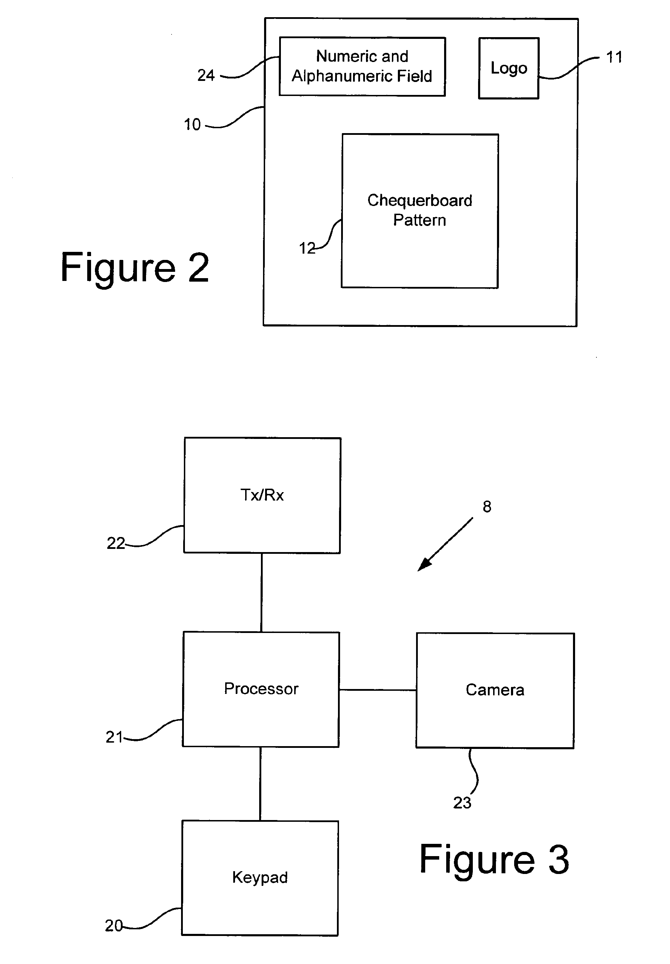

An example of a sign 10 output by the printer 7 is given in Figure 2. The sign 10 includes a logo field 11 containing a company logo, a character field 24 containing the numeric code and/or alphanumeric code, and a machine-readable chequerboard pattern 12 which encodes the Gray Code.

A customer with a mobile phone 8 (shown in Figure 1, and in detail in Figure 3) reads the code in the character field 12 in their preferred form, and inputs the characters into the phone 8 via a keypad 20. The code is then received by processor 21, and transmitted to the server 1 via a transmit/receive interface 22 on the phone, a wireless link 9, and the communication link 6. The server 1 then inputs the code to look-up-table database 4, which returns WGS-84 data associated with the code. The WGS-84 data is then input to location-based-service (LBS) database 3 which returns information based on the WGS-84 data to the mobile phone 8. This information may be any location specific information, such as a list of restaurants in the vicinity of the geographical location associated with the WGS-84 data, or the location of the user in some requested form, for instance in the UK to the Ordance survey National Grid Reference standard.

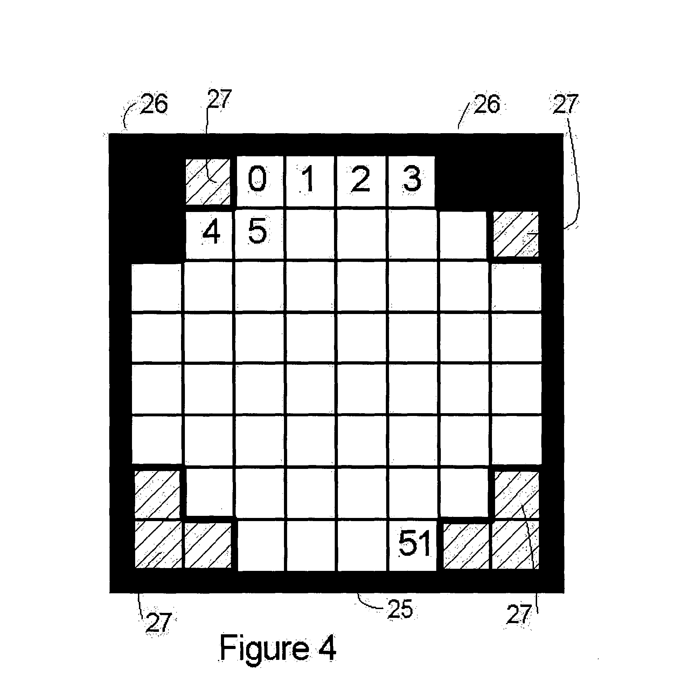

Alternatively the user uses the camera 23 which takes a picture of the code field 12, sends the picture data via a message service to the server 1, which could view it from any angle, recover the code and respond to the phone 8 with information based on the current location. This code can then be fed to the processor 21 in the manner described above, and the information requested by the user may then be delivered as described. Figure 4 shows an example of such a pattern. The outline 25 is solid and allows a simple algorithm to recognise and scale the image. Three squares in each corner are reserved for orientation: two 26 have each square always filled in black, squares 27, here shown for clarity only as hatched, are always left blank. It can be seen that the reserved squares have a rotational symmetry that will be reversed if the image is viewed from behind (for instance if light shines through paper in a window), which can be detected, and the recovery algorithm can thus make the appropriate correction. The two reserved blocks filled black are adjacent, and hence there is no ambiguity in a convention that sets them at the top. With 12 squares out of 64 reserved that leaves 52 which can be filled in or left blank to represent bit values 0 or 1 and thus form a binary code. Using the convention that the black reserved blocks 26 are at the top, the numbers in the squares illustrate that the squares can be numbered in a unique way, in this case top to bottom and left to right assigning bit numbers from 0 to 51. Of course many other patterns can be defined which represent these same properties, and Figure 4 is illustrative only.

Such a system might also have utility in all sorts of emergencies, including traffic accidents where those involved may be in shock, or in abductions and kidnap where someone may have time to do very little. If there was a sign or notice containing the location according to the chequerboard format nearby, the user could simply press an emergency key on a phone, which would capture the image using the camera and send the image and a message identifying the user to a special pre-programmed phone number where the image would be read and an alarm raised. On many phones there are facilities for speed dialing and key 'short-cuts' which would enable such emergency sequences to be set up in whole or part on existing phones.

## Claims

1. A method of determining geographical location, the method comprising taking a picture of a sign to generate picture data; and analysing the picture data to extract a location code which is indicative of a geographical location.

2. A method according to claim 1 wherein the sign includes a machine readable representation of the location code.

3. A method according to claim 2 wherein the machine readable representation of the location code is a chequer board pattern.

4. A method according to any preceding claim wherein the location code is a Gray Code.

5. A method of determining geographical location, the method comprising reading a location code which is indicative of a geographical location, and inputting the location code into a user input device.

6. A method according to claim 5 wherein the user input device is a keypad.

7. A method of providing location specific information, the method comprising receiving a location code which has been determined by a method according to any preceding claim; and transmitting location specific information to a user in accordance with the location code.

8. A method of providing location information, the method comprising distributing a plurality of signs in the environment, each sign including a visual representation of a location code which is indicative of the geographical location of the respective sign.

9. A method of providing location information, the method comprising receiving a sign request from a client; and transmitting location code information to the client in response to the sign request to enable the client to print a sign using the location code information, the sign including a visual representation of a location code which is indicative of the geographical location of the respective sign.

10. A method according to claim 9 wherein the location code information comprises an image file.
